# DEMANDE DE BREVET EUROPEEN

(11) **EP 4 852 304 A1**
(43) Date de publication de la demande: **09.12.2026**
(21) Numéro de dépôt: 26182539.2
(22) Date de dépôt: 02.06.2026
(51) Int. Cl.: H02P 3/18, H02P 6/00

(54) **PROCÉDÉ DE COMMANDE EN FONCTIONNEMENT D'UN ACTIONNEUR ÉLECTROMÉCANIQUE POUR UN DISPOSITIF D'OCCULTATION, ACTIONNEUR ÉLECTROMÉCANIQUE ET DISPOSITIF D'OCCULTATION ASSOCIÉS**

(30) Priorité: 02.06.2025 FR 2505898
(71) Demandeur: Somfy Activites SA, 74300 Cluses (FR)
(72) Inventeur: BRUNO, Serge, 74300 CLUSES (FR)
(74) Mandataire: Lavoix

(57) **Abrégé**

Un procédé de commande en fonctionnement d'un actionneur électromécanique comprend une première étape (E10) de commande, dans laquelle un arbre d'un rotor d'un moteur électrique est commandé à une consigne de vitesse de rotation demandée de fonctionnement, une deuxième étape (E20) de commande d'arrêt de l'arbre, une troisième étape (E30) de commande de blocage de l'arbre, au cours de laquelle une partie des commutateurs du module d'alimentation en énergie électrique est maintenue dans un état statique pendant une période de temps prédéterminée, puis une étape (E60) de maintien à l'arrêt de l'arbre par un frein magnétique.

## Description

La présente invention concerne un procédé de commande en fonctionnement d'un actionneur électromécanique pour un dispositif d'occultation, autrement dit un procédé de commande en fonctionnement d'un actionneur électromécanique d'un dispositif d'occultation.

La présente invention concerne également un actionneur électromécanique pour un dispositif d'occultation, autrement dit un actionneur électromécanique d'un dispositif d'occultation, ainsi qu'un dispositif d'occultation comprenant un écran entraîné en déplacement par un tel actionneur électromécanique.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire, tel qu'un volet, une porte, une grille, un store ou tout autre matériel équivalent, appelé par la suite écran.

On connaît déjà le document EP 3 139 487 A2 qui décrit un actionneur électromécanique pour un dispositif d'occultation. L'actionneur électromécanique comprend un moteur électrique, une unité de contrôle et un frein magnétique. Le moteur électrique est de type sans balais à commutation électronique. Le moteur électrique comprend un rotor et un stator. Le rotor comprend un arbre. Le stator comprend des bobines. L'unité de contrôle comprend un module d'alimentation électrique. Le module d'alimentation électrique comprend des commutateurs. Le module d'alimentation électrique alimente en énergie électrique de manière séquentielle les bobines, au moyen des commutateurs. Cet actionneur électromécanique est configuré pour mettre en œuvre une première commande, dans laquelle l'arbre du rotor du moteur électrique est commandé à une consigne de vitesse de rotation demandée de fonctionnement, puis une deuxième commande d'arrêt de l'arbre du rotor du moteur électrique.

Cependant, cet actionneur électromécanique présente l'inconvénient de mettre en œuvre, suite à la deuxième commande d'arrêt, une troisième commande de freinage de l'arbre du rotor du moteur électrique, dans laquelle les commutateurs sont commandés pour mettre en court-circuit chacune des bobines, de sorte à ralentir la vitesse de rotation de l'arbre du rotor du moteur électrique. L'actionneur électromécanique est configuré pour mettre en œuvre, suite à la troisième commande de freinage, le maintien à l'arrêt de l'arbre du rotor du moteur électrique par le frein magnétique.

Le ralentissement de la vitesse de rotation de l'arbre du rotor du moteur électrique par la mise en court-circuit de chacune des bobines engendre des vibrations au niveau du moteur électrique.

Par conséquent, ces vibrations du moteur électrique pendant cette phase de freinage de l'arbre du rotor du moteur électrique provoquent des nuisances sonores, qui sont perceptibles par l'utilisateur du dispositif d'occultation.

On connaît également le document US 2017/0271947 A1 qui décrit un actionneur électromécanique pour un dispositif d'occultation. L'actionneur électromécanique comprend un moteur électrique, une unité de contrôle et un électrofrein. Le moteur électrique est de type sans balais à commutation électronique. Le moteur électrique comprend un rotor et un stator. Le rotor comprend un arbre. Le stator comprend des bobines. L'unité de contrôle comprend un module d'alimentation électrique. Ce document décrit également un procédé de commande en fonctionnement de l'actionneur électromécanique. Le procédé comprend une première étape de commande, dans laquelle l'arbre du rotor du moteur électrique est commandé à une consigne de vitesse de rotation demandée de fonctionnement. Suite à la première étape de commande, le procédé comprend une deuxième étape de commande d'arrêt de l'arbre du rotor du moteur électrique. Suite à la deuxième étape de commande, le procédé comprend une étape de maintien à l'arrêt de l'arbre du rotor du moteur électrique par l'électrofrein.

Cependant, cet actionneur électromécanique présente l'inconvénient de mettre en œuvre, suite à la deuxième commande d'arrêt, une troisième commande de freinage de l'arbre du rotor du moteur électrique par une mise en court-circuit des bobines, de sorte à ralentir la vitesse de rotation de l'arbre du rotor du moteur électrique. L'actionneur électromécanique est configuré pour mettre en œuvre, suite à la troisième commande de freinage, le maintien à l'arrêt de l'arbre du rotor du moteur électrique par l'électrofrein.

Cette mise en œuvre de la commande de freinage de l'arbre du rotor du moteur électrique par une mise en court-circuit des bobines est semblable à celle qui est décrite dans le document EP 3 139 487 A2 citée précédemment et induit, par conséquent, les mêmes inconvénients.

On connaît également le document US 11,146,188 B2 qui décrit un dispositif de commande pour un ventilateur. Le dispositif de commande comprend un moteur électrique et une unité de contrôle. Le moteur électrique est de type sans balais à commutation électronique. Le moteur électrique comprend un stator. Le stator comprend des bobines. L'unité de contrôle comprend un module d'alimentation électrique. Le module d'alimentation électrique comprend des commutateurs. Le module d'alimentation électrique alimente en énergie électrique les bobines, au moyen des commutateurs. Ce document divulgue également un procédé de commande en fonctionnement du dispositif de commande. Le procédé comprend une première étape de commande, dans laquelle le moteur électrique est commandé en fonctionnement. Suite à la première étape de commande, le procédé comprend une deuxième étape de commande d'arrêt du moteur électrique.

Cependant, ce dispositif de commande présente l'inconvénient de mettre en œuvre, suite à la deuxième commande d'arrêt, une troisième commande de freinage de l'arbre du rotor du moteur électrique par une mise en court-circuit des bobines, de sorte à ralentir la vitesse de rotation de l'arbre du rotor du moteur électrique. Le dispositif de commande est configuré pour mettre en œuvre, suite à la troisième commande de freinage, le maintien à l'arrêt de l'arbre du rotor du moteur électrique par la mise en court-circuit des bobines, suite à la détection d'une force contre-électromotrice au travers des bobines.

Cette mise en œuvre de la commande de freinage de l'arbre du rotor du moteur électrique par une mise en court-circuit des bobines est également semblable à celle qui est décrite dans le document EP 3 139 487 A2 citée précédemment et induit, par conséquent, les mêmes inconvénients.

La présente invention a pour but de résoudre les inconvénients précités et de proposer un procédé de commande en fonctionnement d'un actionneur électromécanique pour un dispositif d'occultation, un actionneur électromécanique pour un dispositif d'occultation, ainsi qu'un dispositif d'occultation comprenant un tel actionneur électromécanique, permettant d'optimiser une valeur d'un couple de maintien magnétique d'un frein magnétique de l'actionneur électromécanique, lorsque l'actionneur électromécanique comprend un moteur électrique de type sans balais à commutation électronique, de sorte à réduire les vibrations générées par le moteur électrique, lors de son fonctionnement, tout en garantissant un maintien à l'arrêt de l'arbre du rotor du moteur électrique par le frein magnétique à une valeur de couple souhaitée et en minimisant le coût d'obtention du frein magnétique. Le couple de maintien magnétique du frein magnétique est généralement appelé en anglais « cogging torque ».

A cet égard, la présente invention vise, selon un premier aspect, un procédé de commande en fonctionnement d'un actionneur électromécanique pour un dispositif d'occultation,
l'actionneur électromécanique comprenant au moins :
- un moteur électrique, le moteur électrique étant de type sans balais à commutation électronique, le moteur électrique comprenant au moins un rotor et un stator, le rotor comprenant au moins un arbre, le stator comprenant au moins des bobines,
- une unité de contrôle, l'unité de contrôle comprenant un module d'alimentation électrique, le module d'alimentation électrique comprenant des commutateurs, le module d'alimentation électrique alimentant en énergie électrique de manière séquentielle les bobines, au moyen des commutateurs, et
- un frein magnétique, le frein magnétique comprenant une partie statorique et une partie rotorique, la partie statorique comprenant des premiers éléments magnétiques, la partie rotorique comprenant des deuxièmes éléments magnétiques,

dans lequel, lorsque l'arbre du rotor du moteur électrique est maintenu à l'arrêt par le frein magnétique, les deuxièmes éléments magnétiques de la partie rotorique sont disposés à distance des premiers éléments magnétiques de la partie statorique et génèrent un couple de maintien du frein magnétique,
le procédé comprenant au moins :
   - une première étape de commande, dans laquelle l'arbre du rotor du moteur électrique est commandé à une consigne de vitesse de rotation demandée de fonctionnement,
   - suite à la première étape de commande, une deuxième étape de commande d'arrêt de l'arbre du rotor du moteur électrique, et
   - suite à la deuxième étape de commande, une étape de maintien à l'arrêt de l'arbre du rotor du moteur électrique par le frein magnétique.

Selon l'invention, suite à la deuxième étape de commande et préalablement à l'étape de maintien à l'arrêt, le procédé comprend, en outre, une troisième étape de commande de blocage de l'arbre du rotor du moteur électrique, au cours de laquelle, une partie des commutateurs est maintenue dans un état statique pendant une période de temps prédéterminée, de sorte à bloquer en rotation l'arbre du rotor du moteur électrique.

Ainsi, ce procédé de commande permet d'optimiser une valeur d'un couple de maintien magnétique du frein magnétique, de sorte à éviter les vibrations générées par le moteur électrique, qui est de type sans balais à commutation électronique, lors de son fonctionnement, en particulier lors de la troisième étape de commande, tout en garantissant un maintien à l'arrêt de l'arbre du rotor du moteur électrique par le frein magnétique à une valeur de couple souhaitée et en minimisant le coût d'obtention du frein magnétique.

De cette manière, les nuisances sonores provoquées par l'actionneur électromécanique, lors du fonctionnement du moteur électrique, en particulier lors de la troisième étape de commande, sont évitées.

En outre, la troisième étape de commande permet de mettre en œuvre une phase de blocage de l'arbre du rotor du moteur électrique, en exécutant une commande des commutateurs du module d'alimentation électrique différente de celle utilisée lors de la première étape de commande.

Par ailleurs, la commande des commutateurs du module d'alimentation électrique, lors de la troisième étape de commande, qui consiste à maintenir une partie des commutateurs dans un état statique pendant la période de temps prédéterminée, engendre une circulation d'un courant dans les bobines, qui aligne des aimants permanents du rotor du moteur électrique avec des flux magnétiques générés par les bobines lors de la mise à l'arrêt de l'arbre du rotor du moteur électrique.

Selon une caractéristique avantageuse de l'invention, le rotor comprend, en outre, des aimants permanents. De plus, la commande des commutateurs du module d'alimentation électrique, lors de la troisième étape de commande, engendre une circulation d'un courant dans les bobines, qui aligne des aimants permanents du rotor du moteur électrique avec des flux magnétiques générés par les bobines lors de la mise à l'arrêt de l'arbre du rotor du moteur électrique.

Selon une autre caractéristique avantageuse de l'invention, le procédé comprend, en outre, suite à la deuxième étape de commande et préalablement à la troisième étape de commande, une quatrième étape de commande, dans laquelle la vitesse de rotation de l'arbre du rotor du moteur électrique décroît, jusqu'à l'atteinte d'une valeur seuil de vitesse de rotation.

Dans un exemple de réalisation, le nombre de commutateurs est égal à six. Le module d'alimentation électrique comprend trois bras. En outre, lors de la troisième étape de commande, deux commutateurs sont maintenus dans un état statique pendant la période de temps prédéterminée, chacun des deux commutateurs appartenant à un bras distinct du module d'alimentation électrique.

En variante, le nombre de commutateurs est égal à six. Le module d'alimentation électrique comprend trois bras. En outre, lors de la troisième étape de commande, trois commutateurs sont maintenus dans un état statique pendant la période de temps prédéterminée, chacun des trois commutateurs appartenant à un bras distinct du module d'alimentation électrique.

Dans un exemple de réalisation, l'état dans lequel les commutateurs sont maintenus dans un état statique pendant la période de temps prédéterminée, lors de la troisième étape de commande, correspond au dernier ordre de commande émis par l'unité de contrôle pour alimenter en énergie électrique les bobines, suivant l'émission d'un ordre de commande d'arrêt à la deuxième étape de commande.

En variante, l'état dans lequel les commutateurs sont maintenus dans un état statique pendant la période de temps prédéterminée, lors de la troisième étape de commande, correspond à un ordre de commande émis par l'unité de contrôle pour alimenter en énergie électrique les bobines suite à un nombre de cycles de commande prédéterminé des commutateurs, suivant l'émission d'un ordre de commande d'arrêt à la deuxième étape de commande.

Dans une autre variante, l'état dans lequel les commutateurs sont maintenus dans un état statique pendant la période de temps prédéterminée, lors de la troisième étape de commande, correspond à un ordre de commande prédéterminé de blocage émis par l'unité de contrôle pour stopper l'alimentation en énergie électrique des bobines, suivant l'émission d'un ordre de commande d'arrêt à la deuxième étape de commande.

Selon une autre caractéristique avantageuse de l'invention, le procédé comprend, en outre, suite à la troisième étape de commande et préalablement à l'étape de maintien à l'arrêt, une étape de coupure de l'alimentation en énergie électrique du module d'alimentation électrique.

La présente invention vise, selon un deuxième aspect, un actionneur électromécanique pour un dispositif d'occultation, conforme à l'invention et tel que mentionné ci-dessus.

Selon l'invention, l'unité de contrôle est configurée pour mettre en œuvre le procédé, en particulier les étapes du procédé, conforme à l'invention et tel que mentionné ci-dessus.

Cet actionneur électromécanique présente des caractéristiques et avantages analogues à ceux décrits précédemment en relation avec le procédé selon l'invention.

La présente invention vise, selon un troisième aspect, un dispositif d'occultation,
le dispositif d'occultation comprenant au moins :
- un écran, et
- un actionneur électromécanique, l'écran étant entraîné en déplacement par l'actionneur électromécanique.

Selon l'invention, l'actionneur électromécanique est conforme à l'invention et tel que mentionné ci-dessus.

Ce dispositif d'occultation présente des caractéristiques et avantages analogues à ceux décrits précédemment, en relation avec l'actionneur électromécanique selon l'invention.

D'autres particularités et avantages de l'invention apparaîtront encore dans la description ci-après, faite en référence aux dessins annexés, donnés à titre d'exemples non limitatifs et dans lesquels :
[Fig 1] la figure 1 est une vue schématique en coupe transversale d'une installation d'occultation conforme à un mode de réalisation de l'invention, l'installation d'occultation comprenant un dispositif d'occultation conforme à l'invention et le dispositif d'occultation comprenant un dispositif d'entraînement motorisé ;
[Fig 2] la figure 2 est une vue schématique en perspective de l'installation d'occultation illustrée à la figure 1 ;
[Fig 3] la figure 3 est une vue schématique en coupe d'un actionneur électromécanique appartenant au dispositif d'entraînement motorisé illustré aux figures 1 et 2, selon un plan de coupe passant par un axe de rotation de l'actionneur électromécanique, cette vue schématique étant interrompue localement au niveau de plusieurs parties de l'actionneur électromécanique ;
[Fig 4] la figure 4 est une vue à plus grande échelle du détail IV à la figure 3 ;
[Fig 5] la figure 5 est un schéma électrique de l'actionneur électromécanique, tel qu'illustré aux figures 3 et 4, comprenant un moteur électrique et une unité de contrôle ; et
[Fig 6] la figure 6 est un schéma blocs d'un procédé, conforme à l'invention, de commande en fonctionnement de l'actionneur électromécanique illustré aux figures 3 et 4.

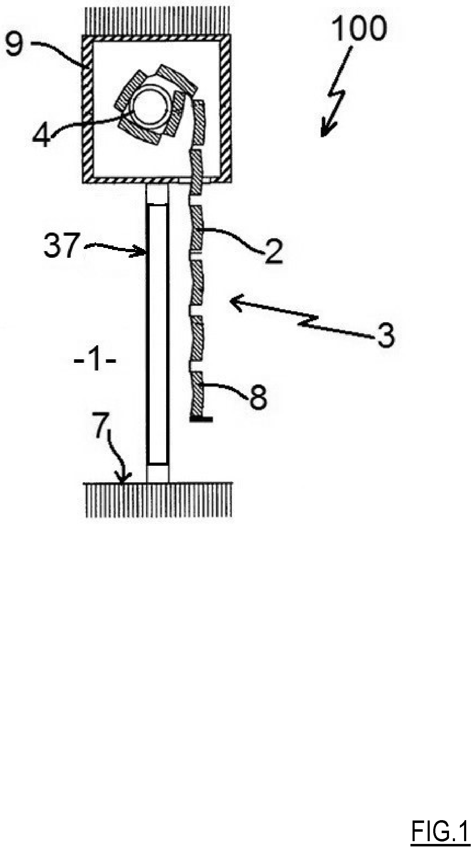

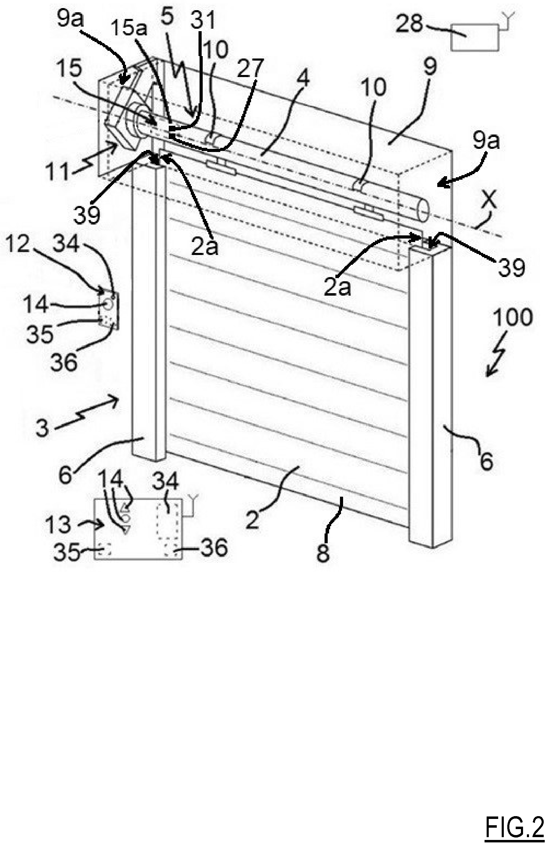

On décrit tout d'abord, en référence aux figures 1 et 2, une installation d'occultation 100 conforme à un mode de réalisation de l'invention. Cette installation d'occultation 100 comprend au moins un dispositif d'occultation 3. Cette installation d'occultation 100, installée dans un bâtiment, non représenté, comporte au moins une ouverture 1, dans laquelle est disposée une fenêtre 37 ou une porte, qui n'est représentée qu'à la figure 1. Cette installation d'occultation 100 est équipée d'au moins un écran 2 appartenant au dispositif d'occultation 3, en particulier un volet roulant motorisé. L'écran 2 du dispositif d'occultation 3 sert à occulter plus ou moins l'ouverture 1.

Une installation de fermeture et une installation de protection solaire sont des exemples d'installations d'occultation. De même, un dispositif de fermeture et un dispositif de protection solaire sont des exemples de dispositifs d'occultation.

L'installation de fermeture, d'occultation ou de protection solaire est par la suite appelée « installation d'occultation » 100.

Le dispositif de fermeture, d'occultation ou de protection solaire est par la suite appelé « dispositif d'occultation » 3. Le dispositif d'occultation 3 comprend l'écran 2.

Le dispositif d'occultation 3 peut être un volet roulant, un store en toile ou avec des lames orientables, un portail roulant, une grille, ou encore une porte. La présente invention s'applique à tous les types de dispositif d'occultation.

On décrit, en référence aux figures 1 et 2, un volet roulant conforme à un mode de réalisation de l'invention.

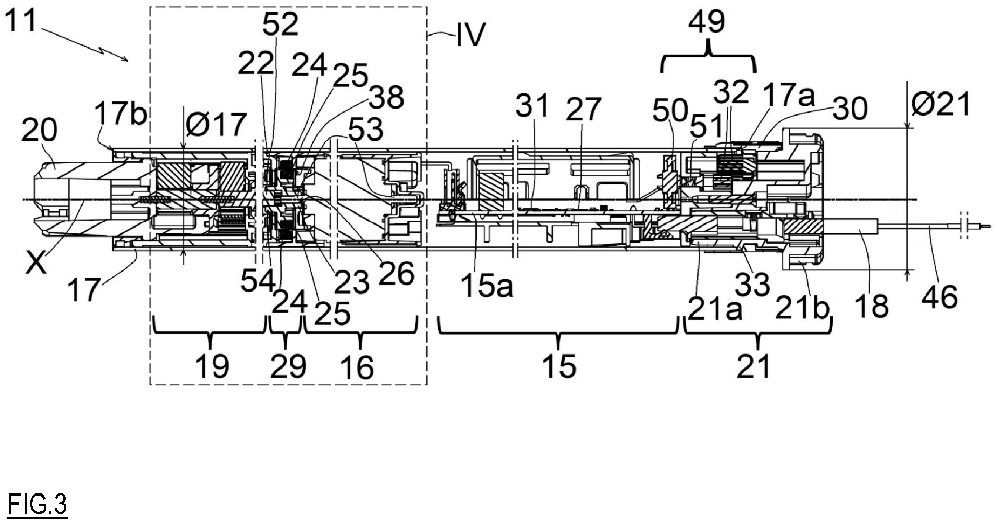

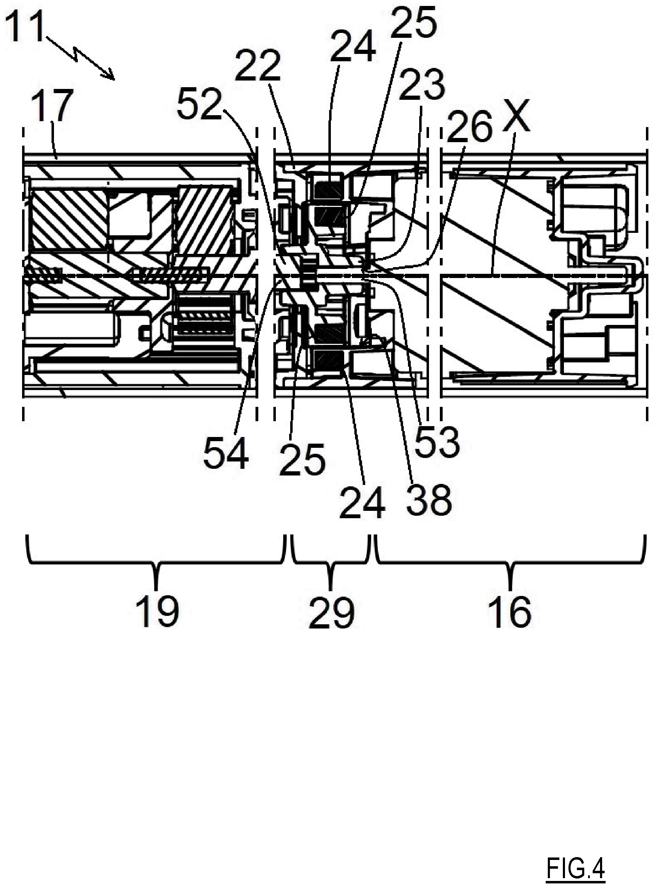

Le dispositif d'occultation 3 comprend un dispositif d'entraînement motorisé 5. Le dispositif d'entraînement motorisé 5 comprend un actionneur électromécanique 11 illustré aux figures 3 et 4.

L'écran 2 est configuré pour être déplacé, autrement dit est déplacé, au moyen du dispositif d'entraînement motorisé 5 et, plus particulièrement, de l'actionneur électromécanique 11.

Avantageusement, le dispositif d'occultation 3, en particulier le dispositif d'entraînement motorisé 5, comprend, en outre, un tube d'enroulement 4. L'écran 2 est enroulable sur le tube d'enroulement 4. En outre, le tube d'enroulement 4 est agencé de sorte à être entraîné en rotation par l'actionneur électromécanique 11.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif d'occultation 3 est un écran de fermeture, d'occultation et/ou de protection solaire, s'enroulant et se déroulant autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif d'occultation 3.

Avantageusement, le dispositif d'occultation 3 comprend, en outre, un coffre 9. En outre, le tube d'enroulement 4 et au moins une partie de l'écran 2 sont logés à l'intérieur du coffre 9, en particulier dans une configuration assemblée du dispositif d'occultation 3.

De manière générale, le coffre 9 est disposé au-dessus de l'ouverture 1, ou encore en partie supérieure de l'ouverture 1.

Avantageusement, le coffre 9 comprend deux joues 9a, telles qu'illustrées à la figure 2. Une joue 9a est disposée à chaque extrémité du coffre 9 et à chaque extrémité du tube d'enroulement 4, en particulier dans la configuration assemblée du dispositif d'occultation 3.

Ainsi, le tube d'enroulement 4 est maintenu par l'intermédiaire du coffre 9, en particulier par l'intermédiaire des joues 9a du coffre 9. Le coffre 9 permet de lier mécaniquement le dispositif d'occultation 3 à la structure du bâtiment, notamment à un mur du bâtiment.

Avantageusement, le dispositif d'occultation 3 peut également comprendre deux coulisses latérales 6, comme illustré uniquement à la figure 2. Chaque coulisse latérale 6 comprend une gorge 39. Chaque gorge 39 de l'une des coulisses latérales 6 coopère, autrement dit est configurée pour coopérer, avec un bord latéral 2a de l'écran 2, en particulier dans la configuration assemblée du dispositif d'occultation 3, de sorte à guider l'écran 2, lors de l'enroulement et du déroulement de l'écran 2 autour du tube d'enroulement 4.

L'actionneur électromécanique 11 est, par exemple, de type tubulaire. Celui-ci permet de mettre en rotation le tube d'enroulement 4 autour d'un axe de rotation X, de sorte à déplacer, en particulier dérouler ou enrouler, l'écran 2 du dispositif d'occultation 3.

Dans un état monté du dispositif d'occultation 3, l'actionneur électromécanique 11 est inséré dans le tube d'enroulement 4.

Avantageusement, le dispositif d'occultation 3 comprend, en outre, une barre de charge 8 pour exercer une tension sur l'écran 2. La barre de charge 8 peut également être appelée lame d'extrémité finale.

Le volet roulant, qui forme le dispositif d'occultation 3, comporte un tablier comprenant des lames horizontales articulées les unes aux autres, formant l'écran 2 du volet roulant 3, et guidées par les coulisses latérales 6. Ces lames sont jointives lorsque le tablier 2 du volet roulant 3 atteint sa position basse déroulée. Une première extrémité de l'écran 2, en particulier l'extrémité supérieure de l'écran 2, dans la configuration assemblée du dispositif d'occultation 3, est fixée au tube d'enroulement 4. En outre, une deuxième extrémité de l'écran 2, en particulier l'extrémité inférieure de l'écran 2, dans la configuration assemblée du dispositif d'occultation 3, est fixée à la barre de charge 8.

La première lame du volet roulant 3, opposée à la lame d'extrémité finale 8, est reliée au tube d'enroulement 4 au moyen d'au moins une articulation 10, en particulier une pièce d'attache en forme de bande. La ou les articulations 10 sont fixées, notamment par vissage ou par rivetage, au tube d'enroulement 4.

Le mode de fixation de l'écran 2 sur le tube d'enroulement 4 n'est pas limitatif et peut être différent. Il peut être mis en œuvre, par exemple, au moyen de sangles.

La première extrémité de l'écran 2 est disposée au niveau du coffre 9.

Dans le cas d'un volet roulant, la position haute enroulée correspond à la mise en appui d'une lame d'extrémité finale 8, par exemple en forme de L, du tablier 2 du volet roulant 3 contre un bord du coffre 9 du volet roulant 3 ou à l'arrêt de la lame d'extrémité finale 8 dans une position de fin de course haute programmée. En outre, la position basse déroulée correspond à la mise en appui de la lame d'extrémité finale 8 du tablier 2 du volet roulant 3 contre un seuil 7 de l'ouverture 1 ou à l'arrêt de la lame d'extrémité finale 8 dans une position de fin de course basse programmée.

Ici, l'écran 2 est configuré pour être déplacé, au moyen du dispositif d'entraînement motorisé 5, en particulier de l'actionneur électromécanique 11, entre une position ouverte, correspondant à la position enroulée et pouvant également être appelée première position de fin de course ou position de fin de course haute, et une position fermée, correspondant à la position déroulée et pouvant également être appelée deuxième position de fin de course ou position de fin de course basse.

Ainsi, l'actionneur électromécanique 11 est configuré pour entraîner, autrement dit entraîne, en déplacement l'écran 2, entre la première position de fin de course et la deuxième position de fin de course, et inversement.

Ici, l'écran 2 est disposé à l'extérieur du bâtiment.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée, en liaison filaire ou non filaire, avec l'unité de commande centrale 13.

Avantageusement, l'unité de commande centrale 13 peut piloter l'unité de commande locale 12, ainsi que d'autres unités de commande locales similaires et réparties dans le bâtiment.

Le dispositif d'entraînement motorisé 5 est, de préférence, configuré pour exécuter les commandes de déroulement ou d'enroulement de l'écran 2 du dispositif d'occultation 3, pouvant être émises, notamment, par l'unité de commande locale 12 ou l'unité de commande centrale 13.

L'installation d'occultation 100 comprend soit l'unité de commande locale 12, soit l'unité de commande centrale 13, soit l'unité de commande locale 12 et l'unité de commande centrale 13.

Des moyens de commande de l'actionneur électromécanique 11, permettant le déplacement de l'écran 2 du dispositif d'occultation 3, comprennent au moins une unité de contrôle 15, en particulier une unité électronique de contrôle.

Cette unité de contrôle 15 appartient au dispositif d'entraînement motorisé 5 et, plus particulièrement, à l'actionneur électromécanique 11. Celle-ci est apte à mettre en fonctionnement un moteur électrique 16 de l'actionneur électromécanique 11 et, en particulier, permettre l'alimentation en énergie électrique du moteur électrique 16.

Ainsi, l'unité de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 31, comme illustré aux figures 2, 3 et 5.

Ici, le dispositif d'entraînement motorisé 5 comprend l'unité de contrôle 15. En outre, l'unité de contrôle 15 comprend le microcontrôleur 31.

Avantageusement, l'unité de contrôle 15 comprend, en outre, un premier module de communication 27, comme illustré aux figures 2 et 3, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Dans un exemple de réalisation, le premier module de communication 27 de l'unité de contrôle 15 est de type sans fil. En particulier, le premier module de communication 27 est configuré pour recevoir des ordres de commande radioélectriques.

En variante ou en complément, le premier module de communication 27 de l'unité de contrôle 15 est de type filaire. En particulier, le premier module de communication 27 est configuré pour recevoir des ordres de commande transmis par des moyens filaires.

Avantageusement, l'unité de contrôle 15, l'unité de commande locale 12 et/ou l'unité de commande centrale 13 peuvent être en communication avec une station météorologique, non représentée, disposée à l'intérieur du bâtiment ou déportée à l'extérieur du bâtiment, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment.

Avantageusement, l'unité de contrôle 15, l'unité de commande locale 12 et/ou l'unité de commande centrale 13 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau Internet pouvant être relié au serveur 28.

L'unité de contrôle 15 peut être commandée à partir de l'unité de commande locale 12 et/ou de l'unité de commande centrale 13. L'unité de commande locale 12 et/ou l'unité de commande centrale 13 est pourvue d'un clavier de commande. Le clavier de commande de l'unité de commande locale 12 ou de l'unité de commande centrale 13 comprend un ou plusieurs éléments de sélection 14 et, éventuellement, un ou plusieurs éléments d'affichage 34.

A titre d'exemples nullement limitatifs, les éléments de sélection peuvent comprendre des boutons poussoirs et/ou des touches sensitives. Les éléments d'affichage peuvent comprendre des diodes électroluminescentes et/ou un afficheur, par exemple LCD (acronyme du terme anglo-saxon « Liquid Crystal Display ») ou **TFT** (acronyme du terme anglo-saxon « Thin Film Transistor »). Les éléments de sélection et d'affichage peuvent être également réalisés au moyen d'un écran tactile.

Avantageusement, l'unité de commande locale 12 et/ou l'unité de commande centrale 13 comprend au moins un deuxième module de communication 36.

Ainsi, le deuxième module de communication 36 de l'unité de commande locale 12 ou de l'unité de commande centrale 13 est configuré pour émettre, autrement dit émet, des ordres de commande, en particulier par des moyens sans fil, par exemple radioélectriques, et/ou par des moyens filaires.

En outre, le deuxième module de communication 36 de l'unité de commande locale 12 ou de l'unité de commande centrale 13 peut également être configuré pour recevoir, autrement dit reçoit, des ordres de commande, en particulier par l'intermédiaire des mêmes moyens.

Avantageusement, le deuxième module de communication 36 de l'unité de commande locale 12 ou de l'unité de commande centrale 13 est configuré pour communiquer, autrement dit communique, avec le premier module de communication 27 de l'unité de contrôle 15.

Ainsi, le deuxième module de communication 36 de l'unité de commande locale 12 ou de l'unité de commande centrale 13 échange des ordres de commande avec le premier module de communication 27 de l'unité de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur une façade d'un mur du bâtiment ou sur une face d'un cadre dormant de la fenêtre 37 ou d'une porte. Un point de commande nomade peut être une télécommande, un téléphone intelligent ou une tablette.

Avantageusement, l'unité de commande locale 12 et/ou l'unité de commande centrale 13 comprend, en outre, un contrôleur 35.

Le dispositif d'entraînement motorisé 5, en particulier l'unité de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou de l'unité de commande centrale 13.

Avantageusement, l'installation d'occultation 100 comprend, en outre, au moins un capteur, non représenté.

En complément ou en variante, le capteur peut être intégré à la station météorologique.

Avantageusement, le capteur comprend au moins un deuxième module de communication 36, tel que celui décrit en référence à l'unité de commande locale 12 ou à l'unité de commande centrale 13. En outre, le deuxième module de communication 36 du capteur est configuré pour communiquer, autrement dit communique, avec le premier module de communication 27 de l'unité de contrôle 15.

Avantageusement, le capteur peut être, par exemple, un capteur d'éclairement, un capteur de température, un capteur d'humidité ou un capteur de vent.

Ainsi, le dispositif d'entraînement motorisé 5 peut également être contrôlé automatiquement par la réception d'un ordre de commande correspondant à au moins un signal provenant du capteur.

En complément ou en variante, le dispositif d'entraînement motorisé 5 peut également être contrôlé automatiquement par la réception d'un ordre de commande correspondant à au moins un signal provenant d'une horloge, non représentée, de l'unité de contrôle 15, en particulier du microcontrôleur 31.

En complément ou en variante, le capteur et/ou l'horloge peuvent être intégrés à l'unité de commande locale 12 ou à l'unité de commande centrale 13.

On décrit à présent, plus en détail et en référence aux figures 3 et 4, l'actionneur électromécanique 11, appartenant à l'installation d'occultation 100 et, plus particulièrement, au dispositif d'occultation 3 et au dispositif d'entraînement motorisé 5 illustrés aux figures 1 et 2.

L'actionneur électromécanique 11 comprend le moteur électrique 16.

Le moteur électrique 16 est représenté par son enveloppe aux figures 3 et 4, sans détails sur ses éléments constitutifs internes.

Avantageusement, le moteur électrique 16 est logé, autrement dit est monté, à l'intérieur d'un carter 17, en particulier dans une configuration assemblée de l'actionneur électromécanique 11.

Le moteur électrique 16 est de type sans balais à commutation électronique, appelé également « BLDC » (acronyme du terme anglo-saxon BrushLess Direct Current) ou « synchrone à aimants permanents ».

Le moteur électrique 16 comprend un rotor et un stator, non représentés.

Le rotor du moteur électrique 16 comprend un arbre 53.

Avantageusement, le rotor comprend, en outre, des aimants permanents, non représentés.

Dans un exemple de réalisation, non représenté, chacun des aimants permanents du rotor est un élément discret.

Dans un premier cas, chaque élément discret formant l'un des aimants permanents est réalisé sous la forme d'une tuile, qui est fixé sur un contour périphérique d'un corps du rotor, par exemple par collage.

Dans un deuxième cas, chaque élément discret formant l'un des aimants permanents est réalisé sous la forme d'une barre, qui est intégrée, autrement dit noyée dans un corps du rotor.

Dans un autre exemple de réalisation, non représenté, chacun des aimants permanents du rotor est un secteur d'un corps du rotor.

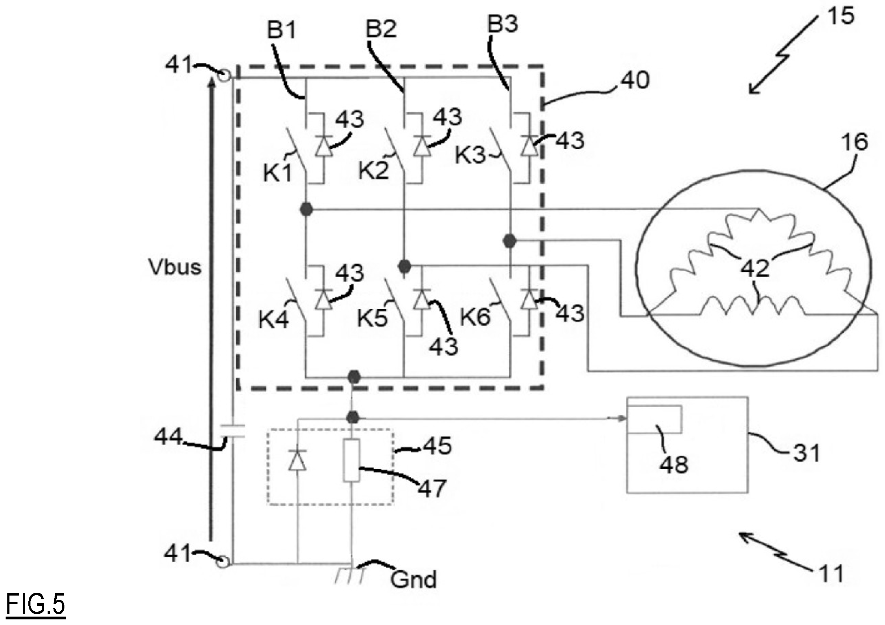

Le stator comprend des bobines 42, comme illustré à la figure 5.

Avantageusement, le rotor et le stator sont positionnés de manière coaxiale autour de l'axe de rotation X, qui est également l'axe de rotation du tube d'enroulement 4 en configuration montée du dispositif d'entraînement motorisé 5.

Avantageusement, l'actionneur électromécanique 11 comprend, en outre, un réducteur 19.

Le réducteur 19 est accouplé, autrement dit est configuré pour être accouplé, avec le moteur électrique 16, en particulier dans la configuration assemblée de l'actionneur électromécanique 11.

Avantageusement, l'actionneur électromécanique 11 comprend, en outre, un dispositif de transmission de couple 54, comme illustré aux figures 3 et 4.

Ici, le dispositif de transmission de couple 54 est constitué d'un organe monobloc, pouvant également être appelé cardan.

Ici, un arbre d'entrée 52 du réducteur 19 est accouplé, autrement dit est configuré pour être accouplé, avec l'arbre 53 du rotor du moteur électrique 16 par l'intermédiaire du dispositif de transmission de couple 54, en particulier dans la configuration assemblée de l'actionneur électromécanique 11.

Avantageusement, le réducteur 19 comprend un ou plusieurs étages de réduction, non représentés. L'étage de réduction, l'un des étages de réduction ou chaque étage de réduction peut être de type épicycloïdal.

Le nombre d'étages de réduction du réducteur n'est pas limitatif. Le nombre d'étages de réduction peut être de un, de deux ou supérieur ou égal à trois.

Avantageusement, l'actionneur électromécanique 11 comprend, en outre, le carter 17, en particulier tubulaire.

Avantageusement, le réducteur 19 et le dispositif de transmission de couple 54 sont logés, autrement dit sont montés, à l'intérieur du carter 17, en particulier dans la configuration assemblée de l'actionneur électromécanique 11.

Ici, le carter 17 est creux. Le carter 17 comprend une première extrémité 17a et une deuxième extrémité 17b. La deuxième extrémité 17b est opposée à la première extrémité 17a.

Ici, le carter 17 de l'actionneur électromécanique 11 est de forme cylindrique, notamment de révolution autour de l'axe de rotation X, et est ouvert à chacune de ses extrémités 17a, 17b.

Avantageusement, le carter 17 est un tube présentant une section circulaire.

Ici, le carter 17 est réalisé dans un matériau métallique.

La matière du carter de l'actionneur électromécanique n'est pas limitative et peut être différente. Il peut s'agir, en particulier, d'une matière plastique.

Avantageusement, l'actionneur électromécanique 11 comprend, en outre, une couronne 30, pouvant également être appelée manchon.

La couronne 30 est disposée, autrement dit est configurée pour être disposée, au voisinage de la première extrémité 17a du carter 17, en particulier dans la configuration assemblée de l'actionneur électromécanique 11.

Avantageusement, le dispositif d'entraînement motorisé 5 et, plus particulièrement, l'actionneur électromécanique 11 comprend, en outre, un câble d'alimentation électrique 18, comme illustré à la figure 3.

Avantageusement, l'unité de contrôle 15 peut être alimentée en énergie électrique au moyen du câble d'alimentation électrique 18. Le câble d'alimentation électrique 18 est connecté électriquement à au moins une source d'alimentation en énergie électrique.

Dans un exemple de réalisation, la source d'alimentation en énergie électrique est un réseau d'alimentation en énergie électrique du secteur, non représenté.

En variante ou en complément, non représentée, la source d'alimentation en énergie électrique est une batterie, qui peut être rechargeable, notamment au moyen d'un panneau photovoltaïque et/ou d'un chargeur, ou au travers d'un réseau d'alimentation en énergie électrique.

Dans une autre variante ou en complément, non représentée, la source d'alimentation en énergie électrique est un réseau d'alimentation en énergie électrique dit PoE (acronyme du terme anglo-saxon « Power over Ethernet »), autrement dit un réseau d'alimentation par câble Ethernet.

Ici, l'actionneur électromécanique 11 comprend le câble d'alimentation électrique 18 permettant son alimentation en énergie électrique, notamment l'alimentation électrique de l'unité de contrôle 15 et l'alimentation électrique du moteur électrique 16, en particulier à partir de la source d'alimentation en énergie électrique.

Avantageusement, l'actionneur électromécanique 11 comprend, en outre, un arbre de sortie 20.

L'arbre de sortie 20 est disposé, autrement dit est configuré pour être disposé, au voisinage de la deuxième extrémité 17b du carter 17, en particulier dans la configuration assemblée de l'actionneur électromécanique 11.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Avantageusement, une extrémité de l'arbre de sortie 20 de l'actionneur électromécanique 11 est en saillie par rapport au carter 17 de l'actionneur électromécanique 11, en particulier par rapport à la deuxième extrémité 17b du carter 17.

Avantageusement, l'arbre de sortie 20 de l'actionneur électromécanique 11 est configuré pour entraîner en rotation, autrement dit entraîne en rotation, un élément de liaison, non représenté. Cet élément de liaison est relié au tube d'enroulement 4, en particulier dans la configuration assemblée du dispositif d'occultation 3. L'élément de liaison est, par exemple, réalisé sous la forme d'une roue. Cet élément de liaison est solidaire en rotation, autour de l'axe de rotation X, à la fois de l'arbre de sortie 20 et du tube d'enroulement 4.

Lors de la mise en fonctionnement de l'actionneur électromécanique 11, le moteur électrique 16 et le réducteur 19 entraînent en rotation, autour de l'axe de rotation X, l'arbre de sortie 20 de l'actionneur électromécanique 11. En outre, l'arbre de sortie 20 de l'actionneur électromécanique 11 entraîne en rotation, autour de l'axe de rotation X, le tube d'enroulement 4 par l'intermédiaire de l'élément de liaison.

Ainsi, le tube d'enroulement 4 entraîne en rotation l'écran 2 du dispositif d'occultation 3, de sorte à dérouler ou à enrouler l'écran 2.

L'actionneur électromécanique 11 comprend, en outre, un frein magnétique 29.

Le frein magnétique 29 est configuré pour bloquer en rotation l'arbre de sortie 20, de sorte à maintenir bloqué le tube d'enroulement 4, lorsque l'actionneur électromécanique 11 est désactivé électriquement, et, éventuellement, pour freiner, de sorte à réguler la vitesse de rotation du tube d'enroulement 4, lors d'un déplacement de l'écran 2.

Avantageusement, le frein magnétique 29 est logé, autrement dit est monté, à l'intérieur du carter 17 de l'actionneur électromécanique 11, en particulier dans la configuration assemblée de l'actionneur électromécanique 11.

Ici et comme visible aux figures 3 et 4, le frein magnétique 29 est configuré pour être disposé, autrement dit est disposé, en particulier dans la configuration assemblée de l'actionneur électromécanique 11, entre le moteur électrique 16 et le réducteur 19, c'est-à-dire à la sortie du moteur électrique 16.

Le frein magnétique 29 comprend une partie statorique 22 et une partie rotorique 23. La partie statorique 22 comprend des premiers éléments magnétiques 24. En outre, la partie rotorique 23 comprend des deuxièmes éléments magnétiques 25.

Avantageusement, la partie rotorique 23 du frein magnétique 29 est mobile en rotation autour de l'axe de rotation X et est solidaire de l'arbre 53 du rotor du moteur électrique 16. En outre, la partie statorique 22 du frein magnétique 29 est stationnaire par rapport au moteur électrique 16, notamment au stator du moteur électrique 16, en particulier dans la configuration assemblée de l'actionneur électromécanique 11.

Avantageusement, la partie rotorique 23 du frein magnétique 29 comprend un logement 26. En outre, l'arbre 53 du rotor du moteur électrique 16 est partiellement logé, autrement dit est configuré pour être partiellement logé, à l'intérieur du logement 26 de la partie rotorique 23 du frein magnétique 29, en particulier dans la configuration assemblée de l'actionneur électromécanique 11.

Dans un exemple de réalisation, tel qu'illustré aux figures 3 et 4, la partie statorique 22 du frein magnétique 29 est solidaire du stator du moteur électrique 16.

En variante, non représentée, la partie statorique 22 du frein magnétique 29 est solidaire d'un bol du moteur électrique 16. Le bol du moteur électrique 16 enferme une partie des bobines 42 du moteur électrique 16 au niveau de l'une des extrémités du stator du moteur électrique 16.

Dans une autre variante, non représentée, la partie statorique 22 du frein magnétique 29 est solidaire du réducteur 19 ou encore du carter 17 de l'actionneur électromécanique 11.

Lorsque l'arbre 53 du rotor du moteur électrique 16 est maintenu à l'arrêt par le frein magnétique 29, les deuxièmes éléments magnétiques 25 de la partie rotorique 23 sont disposés à distance des premiers éléments magnétiques 24 de la partie statorique 22 et génèrent un couple de maintien du frein magnétique 29. Autrement dit, le frein magnétique 29 est un frein sans friction.

Dans un exemple de réalisation, tel qu'illustré aux figures 3 et 4, la partie rotorique 23 du frein magnétique 29 est disposée, autrement dit est configurée pour être disposée, à l'intérieur de la partie statorique 22 du frein magnétique 29, en particulier dans la configuration assemblée de l'actionneur électromécanique 11.

Ainsi, la partie rotorique 23 et la partie statorique 22 du frein magnétique 29 sont disposées l'une à l'intérieur de l'autre, de manière concentrique.

De cette manière, les deuxièmes éléments magnétiques 25 de la partie rotorique 23 du frein magnétique 29 sont positionnés par rapport aux premiers éléments magnétiques 24 de la partie statorique 22 du frein magnétique 29, selon une configuration d'aimantation radiale, par rapport à l'axe de rotation X.

Avantageusement, la partie statorique 22 du frein magnétique 29 comprend un logement 38. En outre, la partie rotorique 23 du frein magnétique 29 est disposée, autrement dit est configurée pour être disposée à l'intérieur du logement 38 de la partie statorique 22 du frein magnétique 29, en particulier dans la configuration assemblée de l'actionneur électromécanique 11.

Ici, la partie rotorique 23 du frein magnétique 29 présente une section circulaire. En outre, le logement 38 de la partie statorique 22 du frein magnétique 29 présente une section circulaire.

Par ailleurs, la partie statorique 22 du frein magnétique 29 est une première pièce, en particulier de forme annulaire, et la partie rotorique 23 du frein magnétique 29 est une deuxième pièce, en particulier de forme cylindrique.

En variante, non représentée, la partie rotorique 23 du frein magnétique 29 est disposée, autrement dit est configurée pour être disposée, parallèlement à la partie statorique 22 du frein magnétique 29, selon une direction définie par l'axe de rotation X, en particulier dans la configuration assemblée de l'actionneur électromécanique 11.

Ainsi, la partie rotorique 23 et la partie statorique 22 du frein magnétique 29 sont disposées l'une à côté de l'autre, selon la direction définie par l'axe de rotation X.

De cette manière, les deuxièmes éléments magnétiques 25 de la partie rotorique 23 du frein magnétique 29 sont positionnés par rapport aux premiers éléments magnétiques 24 de la partie statorique 22 du frein magnétique 29, selon une configuration d'aimantation axiale, parallèle à la direction définie par l'axe de rotation X.

Avantageusement, le nombre de premiers éléments magnétiques 24 est égal au nombre de deuxièmes éléments magnétiques 25.

Ici, le nombre de premiers éléments magnétiques 24, respectivement de deuxièmes éléments magnétiques 25, est de quatre, dont deux sont visibles aux figures 3 et 4.

Le nombre de premiers éléments magnétiques, respectivement de deuxièmes éléments magnétiques, n'est pas limitatif et peut être différent. Il peut être, par exemple, supérieur ou égal à deux.

En variante, non représentée, le nombre de premiers éléments magnétiques 24 est différent du nombre de deuxièmes éléments magnétiques 25.

Avantageusement, les dimensions des premiers éléments magnétiques 24 sont égales aux dimensions des deuxièmes éléments magnétiques 25.

En variante, non représentée, les dimensions des premiers éléments magnétiques 24 sont différentes des dimensions des deuxièmes éléments magnétiques 25.

Dans un exemple de réalisation, tel qu'illustré aux figures 3 et 4, chacun des premiers éléments magnétiques 24 est un aimant permanent et chacun des deuxièmes éléments magnétiques 25 est un aimant permanent.

Dans ce cas, chaque aimant permanent des premiers éléments magnétiques 24 et des deuxièmes éléments magnétiques 25 comprend un pôle Nord et un pôle Sud.

Dans un exemple de réalisation, lorsque l'arbre 53 du rotor du moteur électrique 16 est maintenu à l'arrêt par le frein magnétique 29, les premiers éléments magnétiques 24 de la partie statorique 22 et les deuxième éléments magnétiques 25 de la partie rotorique 23 sont dans une configuration d'attraction magnétique, c'est-à-dire que le pôle Nord des premiers éléments magnétiques 24 de la partie statorique 22 est disposé en vis-à-vis du pôle Sud des deuxième éléments magnétiques 25 de la partie rotorique 23, ou le pôle Sud des premiers éléments magnétiques 24 de la partie statorique 22 est disposé en vis-à-vis du pôle Nord des deuxième éléments magnétiques 25 de la partie rotorique 23.

En variante, lorsque l'arbre 53 du rotor du moteur électrique 16 est maintenu à l'arrêt par le frein magnétique 29, les premiers éléments magnétiques 24 de la partie statorique 22 et les deuxième éléments magnétiques 25 de la partie rotorique 23 sont dans une configuration de répulsion magnétique, c'est-à-dire que le pôle Nord des premiers éléments magnétiques 24 de la partie statorique 22 est disposé en vis-à-vis du pôle Nord des deuxième éléments magnétiques 25 de la partie rotorique 23, ou le pôle Sud des premiers éléments magnétiques 24 de la partie statorique 22 est disposé en vis-à-vis du pôle Sud des deuxième éléments magnétiques 25 de la partie rotorique 23.

En variante, non représentée, chacun des premiers éléments magnétiques 24 est un aimant permanent et chacun des deuxièmes éléments magnétiques 25 est un élément métallique ferromagnétique, ou inversement.

Dans un exemple de réalisation, tel qu'illustré aux figures 3 et 4, chacun des premiers éléments magnétiques 24 est un élément discret et chacun des deuxièmes éléments magnétiques 25 est un élément discret.

Avantageusement, chaque élément discret formant l'un des premiers éléments magnétiques 24 ou l'un des deuxièmes éléments magnétiques 25 est réalisé sous la forme d'une pastille, pouvant présenter, par exemple, une section circulaire, carré ou rectangulaire.

Avantageusement, la partie statorique 22 comprend des premiers logements, non représentés. Chaque premier logement reçoit, autrement dit est configuré pour recevoir, un premier élément magnétique 24, en particulier dans la configuration assemblée de l'actionneur électromécanique 11. En outre, la partie rotorique 23 comprend des deuxièmes logements, non représentés. Chaque deuxième logement reçoit, autrement dit est configuré pour recevoir, un deuxième élément magnétique 25, en particulier dans la configuration assemblée de l'actionneur électromécanique 11.

Dans un exemple de réalisation, le nombre de premiers logements de la partie statorique 22 est égal au nombre de premiers éléments magnétiques 24 et le nombre de deuxièmes logements de la partie rotorique 23 est égal au nombre de deuxièmes éléments magnétiques 25.

Dans un autre exemple de réalisation, non représenté, le nombre de premiers logements de la partie statorique 22 est strictement supérieur au nombre de premiers éléments magnétiques 24. En variante ou en complément, le nombre de deuxièmes logements de la partie rotorique 23 est strictement supérieur au nombre de deuxièmes éléments magnétiques 25.

Ainsi, certains premiers logements de la partie statorique 22 sont vides, autrement dit sont dépourvus de premiers éléments magnétiques 24. En complément ou en variante, certains deuxièmes logements de la partie rotorique 23 sont vides, autrement dit sont dépourvus de deuxièmes éléments magnétiques 25.

En variante, non représentée, chacun des premiers éléments magnétiques 24 est un secteur de la partie statorique 22. En variante ou en complément, chacun des deuxièmes éléments magnétiques 25 est un secteur de la partie rotorique 23.

Avantageusement, chaque secteur de la partie statorique 22 formant l'un des premiers éléments magnétiques 24 et/ou chaque secteur de la partie rotorique 23 formant l'un des deuxièmes éléments magnétiques 25 est réalisé à partir d'une poudre aimantée.

Avantageusement, la poudre aimantée formant soit les secteurs aimantés des premiers éléments magnétiques 24, soit les secteurs aimantés des deuxièmes éléments magnétiques 25, soit les secteurs aimantés des premiers éléments magnétiques 24 et des deuxièmes éléments magnétiques 25, est mélangée à une autre matière formant la partie statorique 22 et/ou la partie rotorique 23.

Avantageusement, la poudre aimantée est réalisée à partir de particules de fer, de cobalt et/ou de nickel.

Avantageusement, l'autre matière formant la partie statorique 22 et/ou la partie rotorique 23 est une matière plastique.

En variante, non représentée, les deuxièmes éléments magnétiques 25 de la partie rotorique 23 sont constitués par une partie des aimants permanents du rotor. Ainsi, dans ce cas, la partie rotorique 23 fait partie intégrante du rotor du moteur électrique 16.

Avantageusement, l'actionneur électromécanique 11 comprend, en outre, un dispositif de détection de fins de course et/ou d'obstacle, lors du déplacement de l'écran 2. Ce dispositif de détection de fins de course et/ou d'obstacle peut être mécanique ou électronique.

Avantageusement, le dispositif de détection de fins de course et/ou d'obstacle est mis en œuvre au moyen du microcontrôleur 31 de l'unité de contrôle 15 et, en particulier, au moyen d'un algorithme mis en œuvre par ce microcontrôleur 31.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen de la couronne 30. La couronne 30 permet ainsi de réaliser un palier. La deuxième liaison pivot, non représentée, est réalisée au niveau d'une deuxième extrémité du tube d'enroulement 4, opposée à la première extrémité.

La couronne 30 forme, autrement dit est configurée pour former ou constituer, un palier de guidage en rotation du tube d'enroulement 4, en particulier dans la configuration assemblée du dispositif d'occultation 3.

Avantageusement, l'actionneur électromécanique 11 comprend, en outre, un support de couple 21.

Ici, le support de couple 21 est disposé au niveau de la première extrémité 17a du carter 17 de l'actionneur électromécanique 11, en particulier dans la configuration assemblée de l'actionneur électromécanique 11.

Le support de couple 21 permet de reprendre les efforts exercés par l'actionneur électromécanique 11, en particulier le couple exercé par l'actionneur électromécanique 11, par rapport à la structure du bâtiment. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment.

Ainsi, le support de couple 21 permet de fixer l'actionneur électromécanique 11 sur un bâti, en particulier à l'une des joues 9a du coffre 9.

Avantageusement, le support de couple 21 est en saillie au niveau de la première extrémité 17a du carter 17.

Avantageusement, le support de couple 21 obture, autrement dit est configuré pour obturer, la première extrémité 17a du carter 17, en particulier dans la configuration assemblée de l'actionneur électromécanique 11.

Par ailleurs, le support de couple 21 de l'actionneur électromécanique 11 peut supporter au moins une partie de l'unité de contrôle 15.

Avantageusement, le support de couple 21 est fixé, autrement dit est configuré pour être fixé, au carter 17 au moyen d'un ou plusieurs éléments de fixation, non représentés, en particulier dans la configuration assemblée de l'actionneur électromécanique 11. Le ou les éléments de fixation peuvent être, notamment, des bossages, des vis de fixation, des éléments de fixation par encliquetage élastique, des nervures emmanchées dans des échancrures ou une combinaison de ces différents éléments de fixation.

Avantageusement, le support de couple 21 comprend une première partie 21a, pouvant également être appelée « point fixe », et une deuxième partie 21b, pouvant également être appelée « tête d'actionneur ».

Avantageusement, la première partie 21a du support de couple 21 est assemblée, autrement dit est configurée pour être assemblée, avec le carter 17, en particulier dans la configuration assemblée de l'actionneur électromécanique 11. En outre, la deuxième partie 21b du support de couple 21 est configurée pour être assemblée, autrement dit est assemblée, avec le coffre 9, en particulier dans une configuration assemblée de l'actionneur électromécanique 11 dans le dispositif d'occultation 3.

Dans l'exemple de réalisation illustré à la figure 3, le support de couple 21 est constitué d'une seule pièce, autrement dit d'une pièce monobloc, formant les première et deuxième parties 21a, 21b du support de couple 21.

Dans un autre exemple de réalisation, non représenté, la deuxième partie 21b du support de couple 21 est assemblée, autrement dit est configurée pour être assemblée, sur la première partie 21a du support de couple 21, en particulier dans la configuration assemblée de l'actionneur électromécanique 11. Dans ce cas, la deuxième partie 21b du support de couple 21 est assemblée sur la première partie 21a du support de couple 21 au moyen d'éléments d'assemblage.

Ainsi, dans ce cas, le support de couple 21 est constitué d'au moins deux pièces distinctes formant chacune respectivement les première et deuxième parties 21a, 21b du support de couple 21.

De cette manière, la deuxième partie 21b du support de couple 21 peut être interchangeable par rapport à la première partie 21a du support de couple 21, notamment en fonction de la forme et du type des éléments de maintien, non représentés, disposés au niveau du coffre 9.

Avantageusement, la deuxième partie 21b du support de couple 21 peut présenter différentes formes extérieures, notamment une forme cannelée, dite « en étoile », autrement dit comprenant des reliefs sur son contour, ou une forme ronde, autrement dit dépourvue de reliefs sur son contour, non représentée.

Avantageusement, au moins une portion de la première partie 21a du support de couple 21 est de forme générale cylindrique et est disposée, autrement dit est configurée pour être disposée, à l'intérieur du carter 17, en particulier dans la configuration assemblée de l'actionneur électromécanique 11.

Avantageusement, un diamètre extérieur Ø21 d'au moins une portion de la deuxième partie 21b du support de couple 21 est supérieur ou égal à un diamètre extérieur Ø17 du carter 17.

Avantageusement, le support de couple 21 comprend, en outre, une butée 33, comme illustrée à la figure 3. En outre, la butée 33 est en appui, autrement dit est configurée pour être en appui, contre le carter 17, au niveau de la première extrémité 17a du carter 17, en particulier dans la configuration assemblée de l'actionneur électromécanique 11.

Ainsi, la butée 33 du support de couple 21 permet de limiter l'enfoncement de la première partie 21a du support de couple 21 dans le carter 17, suivant la direction de l'axe de rotation X.

De cette manière, la première partie 21a du support de couple 21 est disposée à l'intérieur du carter 17 et la deuxième partie 21b du support de couple 21 est disposée à l'extérieur du carter 17.

Ici, la butée 33 du support de couple 21 comprend un épaulement.

Dans un exemple de réalisation, tel qu'illustré à la figure 3, la couronne 30 est disposée ou insérée, autrement dit est configurée pour être disposée ou insérée, autour d'une partie du carter 17, en particulier dans la configuration assemblée de l'actionneur électromécanique 11. Dans ce cas, la couronne 30 est montée libre en rotation autour du carter 17.

En variante, non représentée, la couronne 30 est disposée ou insérée, autrement dit est configurée pour être disposée ou insérée, autour du support de couple 21, en particulier de la première partie 21a du support de couple 21, notamment dans la configuration assemblée de l'actionneur électromécanique 11. Dans ce cas, la couronne 30 est montée libre en rotation autour du support de couple 21, en particulier de la première partie 21a du support de couple 21.

Dans une autre variante, non représentée, la couronne 30 est disposée ou insérée, autrement dit est configurée pour être disposée ou insérée, d'une part, autour du support de couple 21 et, d'autre part, autour d'une partie du carter 17 de l'actionneur électromécanique 11, en particulier de la première extrémité 17a du carter 17, notamment dans la configuration assemblée de l'actionneur électromécanique 11. Dans un tel cas, la couronne 30 est montée libre en rotation, d'une part, autour du support de couple 21 et, d'autre part, autour du carter 17 de l'actionneur électromécanique 11.

Avantageusement, le support de couple 21 comprend, en outre, un couvercle, non représenté.

Le couvercle est monté, autrement dit est configuré pour être monté, sur le support de couple 21, notamment sur la deuxième partie 21b du support de couple 21, en particulier dans la configuration assemblée de l'actionneur électromécanique 11.

L'unité de contrôle 15 est logée, autrement dit est montée, au moins en partie à l'intérieur du carter 17, en particulier dans la configuration assemblée de l'actionneur électromécanique 11.

Ici et comme illustré à la figure 3, l'unité de contrôle 15 est disposée, autrement dit est intégrée, à l'intérieur du carter 17 de l'actionneur électromécanique 11.

En complément ou en variante, non représentée, l'unité de contrôle 15 est montée en partie ou en intégralité à l'extérieur du carter 17 de l'actionneur électromécanique 11 et, en particulier, dans le support de couple 21 ou dans le coffre 9.

Avantageusement, l'unité de contrôle 15 comprend au moins une carte électronique 15a. La ou chaque carte électronique 15a est alimentée en énergie électrique au moyen du câble d'alimentation électrique 18.

Ici, l'unité de contrôle 15 comprend une seule carte électronique 15a.

Avantageusement, le support de couple 21 comprend, autrement dit intègre, au moins un dispositif de sélection, non représenté, en particulier un bouton, pouvant être, par exemple, de type poussoir ou magnétique. En outre, le ou chaque dispositif de sélection est configuré, notamment, pour réaliser un réglage de l'actionneur électromécanique 11 au travers d'un ou plusieurs modes de configuration, pour appairer avec l'actionneur électromécanique 11 une ou plusieurs unités de commande 12, 13, pour réinitialiser un ou plusieurs paramètres, pouvant être, par exemple, une position de fin de course, pour réinitialiser la ou les unités de commande 12, 13 appairées ou encore pour commander le déplacement de l'écran 2.

Avantageusement, le support de couple 21 comprend, autrement dit intègre, au moins un dispositif d'affichage, non représenté. En outre, le ou chaque dispositif d'affichage est configuré, notamment, pour afficher une indication visuelle, pouvant être, par exemple, représentative d'un mode de fonctionnement de l'actionneur électromécanique 11, en particulier un mode de configuration ou un mode de commande, ou encore d'un état d'un organe du dispositif d'entraînement motorisé 5.

En variante, non représentée, l'unité de contrôle 15 comprend une première carte électronique 15a et une deuxième carte électronique. La première carte électronique 15a est disposée à l'intérieur du carter 17 de l'actionneur électromécanique 11, en particulier dans la configuration assemblée de l'actionneur électromécanique 11. En outre, la deuxième carte électronique est disposée à l'intérieur du support de couple 21 de l'actionneur électromécanique 11, en particulier dans la configuration assemblée de l'actionneur électromécanique 11. Avantageusement, la première carte électronique 15a est configurée pour contrôler le moteur électrique 16. En outre, la deuxième carte électronique est configurée pour, notamment, accéder aux fonctions de paramétrage et/ou de configuration de l'actionneur électromécanique 11, au moyen du ou des dispositifs de sélection et, éventuellement, du ou des dispositifs d'affichage.

Avantageusement, l'actionneur électromécanique 11 comprend, en outre, un dispositif de comptage 49.

Le dispositif de comptage 49 est configuré pour coopérer, autrement dit coopère, avec l'unité de contrôle 15. En outre, le dispositif de comptage 49 et l'unité de contrôle 15 sont configurés pour déterminer une position, pouvant être appelée « courante », de l'écran 2.

Avantageusement, l'unité de contrôle 15 est configurée pour surveiller au moins un signal provenant du dispositif de comptage 49 à une fréquence prédéterminée, notamment en fonction de la position de l'écran 2.

Ici, le dispositif de comptage 49 est de type magnétique.

Dans un tel cas, le dispositif de comptage 49 peut comprendre une roue codeuse 50 et un ou plusieurs capteurs, non représentés, en particulier à effet Hall.

Ici, le dispositif de comptage 49 comprend deux capteurs.

Le nombre de capteurs n'est pas limitatif et peut être différent. **Il** peut être, par exemple, égal à un ou à trois.

Ici, la couronne 30 comprend, sur sa face intérieure, une denture, non représentée, configurée pour coopérer, autrement dit coopérant, avec au moins un pignon 32, installé à l'intérieur du support de couple 21 ou, alternativement, à l'intérieur du carter 17 de l'actionneur électromécanique 11. Dans l'exemple de réalisation de la figure 3, les pignons 32 sont au nombre de deux. Dans ce cas, la roue codeuse 50 est reliée au ou à l'un des pignons 32, en particulier au moyen d'un arbre 51. Ainsi, la denture de la couronne 30 est configurée pour entraîner en rotation, autrement dit entraîne en rotation, le ou chaque pignon 32, de sorte à compter le nombre de tours du tube d'enroulement 4. Dans ce cas, la denture de la couronne 30 et le ou chaque pignon 32 font partie du dispositif de comptage 49.

En variante, non représentée, la roue codeuse 50 est reliée à l'arbre 53 du rotor du moteur électrique 16. En outre, le ou chaque capteur est assemblé sur une carte électronique de l'unité de contrôle 15, en particulier sur une troisième carte électronique ou sur la première carte électronique 15a.

Ainsi, le dispositif de comptage 49 permet de déterminer le nombre de tours réalisés par l'arbre 53 du rotor du moteur électrique 16.

En variante, non représentée, le dispositif de comptage 49 peut être dépourvu de capteurs. Dans ce cas, le dispositif de comptage 49 est configuré pour, en coopération avec l'unité de contrôle 15, analyser les signaux de commande d'alimentation en énergie électrique du moteur électrique 16 et déterminer une position, pouvant être appelée « courante », du rotor du moteur électrique 16 et, par conséquent, de l'arbre de sortie 20 de l'actionneur électromécanique 11 et du tube d'enroulement 4.

En variante, non représentée, le dispositif de comptage 49 permet de déterminer le nombre de tours réalisés par l'arbre de sortie 20 de l'actionneur électromécanique 11.

Avantageusement, le dispositif de comptage 49 permet également de déterminer le sens de rotation du tube d'enroulement 4 et/ou de gérer les positions de fin de course de l'écran 2.

Le type du dispositif de comptage n'est pas limitatif et peut être différent, en particulier optique, par exemple un encodeur équipé d'un ou plusieurs capteurs optiques, ou temporel.

Avantageusement, dans le cas où le premier module de communication 27 de l'unité de contrôle 15 est de type sans fil, l'actionneur électromécanique 11 comprend, en outre, une antenne radioélectrique 46. En outre, l'antenne radioélectrique 46 est reliée électriquement, autrement dit est configurée pour être reliée électriquement, à l'unité de contrôle 15 et, par conséquent, au premier module de communication 27, en particulier dans la configuration assemblée de l'actionneur électromécanique 11.

Ici, l'antenne radioélectrique 46 est réalisée sous la forme d'un fil, en particulier métallique, pouvant être, par exemple, en cuivre ou en aluminium. En outre, ce fil est recouvert d'une gaine d'isolation électrique, autrement dit est logé dans une gaine d'isolation électrique, pouvant être, par exemple, en matière plastique.

Avantageusement, le fil formant l'antenne radioélectrique 46 est disposé en partie à l'extérieur de l'actionneur électromécanique 11.

Ici, l'antenne radioélectrique 46 fait partie intégrante du câble d'alimentation électrique 18. Autrement dit, le câble d'alimentation électrique 18 comprend l'antenne radioélectrique 46.

En variante, non représentée, l'antenne radioélectrique 46 est distincte du câble d'alimentation électrique 18.

Dans une autre variante, non représentée, l'antenne radioélectrique 46 est réalisée au moyen d'un câble coaxial.

Dans une autre variante, non représentée, l'antenne radioélectrique 46 est réalisée au moyen d'un circuit imprimé, pouvant être, par exemple, être intégré à l'une des cartes électroniques 15a ou équivalente de l'unité de contrôle 15.

On décrit à présent plus en détail l'unité de contrôle 15, en référence à la figure 5.

Avantageusement, l'unité de contrôle 15 comprend un circuit, non représenté, de redressement d'une tension alternative provenant de la source d'alimentation en énergie électrique.

L'unité de contrôle 15 comprend un module d'alimentation électrique 40, pouvant également être appelé onduleur.

Le module d'alimentation électrique 40 comprend des commutateurs K1, K2, K3, K4, K5, K6.

Le module d'alimentation électrique 40 alimente en énergie électrique, autrement dit est configuré pour alimenter en énergie électrique, de manière séquentielle les bobines 42, au moyen des commutateurs K1, K2, K3, K4, K5, K6.

Ainsi, l'alimentation en énergie électrique des bobines 42 permet de produire un champ électromagnétique tournant provoquant l'entraînement en rotation du rotor du moteur électrique 16.

Ici, les commutateurs K1, K2, K3, K4, K5, K6 du module d'alimentation électrique 40 sont des transistors de type MOSFET (acronyme du terme anglo-saxon « Metal Oxide Semiconductor Field Effect Transistor »).

Le type de commutateurs du module d'alimentation électrique n'est pas limitatif. Les commutateurs du module d'alimentation électrique peuvent être, par exemple, des transistors de type IGBT (acronyme du terme anglo-saxon « Insulated Gate Bipolar Transistor »).

Avantageusement, les commutateurs K1, K2, K3, K4, K5, K6 sont au nombre de six.

Avantageusement, le module d'alimentation électrique 40 comprend, en outre, trois bras B1, B2, B3.

Ici et comme illustré à la figure 5, les commutateurs K1 et K4 appartiennent à un premier bras B1 du module d'alimentation électrique 40. Les commutateurs K2 et K5 appartiennent à un deuxième bras B2 du module d'alimentation électrique 40. En outre, les commutateurs K3 et K6 appartiennent à un troisième bras B3 du module d'alimentation électrique 40.

Avantageusement, le module d'alimentation électrique 40 comprend, en outre, des diodes anti-retour 43. En outre, chaque commutateur K1, K2, K3, K4, K5, K6 est monté en parallèle de l'une des diodes anti-retour 43.

Avantageusement, le module d'alimentation électrique 40 est connecté électriquement à une source de tension continue Vbus. La valeur de la tension continue Vbus est définie par rapport à une tension de référence Gnd. La tension continue Vbus est la tension aux bornes du module d'alimentation électrique 40.

Avantageusement, le module d'alimentation électrique 40 comprend, en outre, deux bornes 41 et un condensateur de filtrage 44. Le condensateur de filtrage 44 est relié électriquement aux deux bornes 41 du module d'alimentation en énergie électrique 40.

Ainsi, le condensateur de filtrage 44 permet de protéger la source d'alimentation en énergie électrique.

Avantageusement, le module d'alimentation en énergie électrique 40 est commandé via un signal à modulation de largeur d'impulsions, de sigle MLI en français ou PWM en anglais (acronyme du terme anglo-saxon « Pulse Width Modulation »).

Avantageusement, l'unité de contrôle 15 comprend, en outre, un dispositif de mesure 45 d'une valeur d'intensité I d'un courant électrique traversant le moteur électrique 16.

Au sens de la présente invention, l'intensité traversant le moteur électrique 16 est l'intensité d'un courant électrique traversant ce moteur électrique 16 en fonctionnement. L'intensité traversant le moteur électrique 16 est obtenue au moyen d'un signal redressé positif prenant en considération le courant de chacune des bobines 42.

L'acquisition de la valeur d'intensité I traversant le moteur électrique 16 par l'intermédiaire du dispositif de mesure 45 permet d'obtenir un signal représentatif du couple généré par le moteur électrique 16.

Ici, le dispositif de mesure 45 de la valeur d'intensité I est mis en œuvre au moyen d'une résistance 47, dite de « shunt », connectée électriquement au module d'alimentation électrique 40 et à la tension de référence Gnd.

Avantageusement, le dispositif de mesure 45 est relié électriquement à une entrée du microcontrôleur 31. En outre, l'entrée du microcontrôleur 31 comprend un convertisseur analogique/numérique 48.

Avantageusement, le dispositif de mesure 45 fait partie intégrante d'un générateur de signaux, non représenté. Ce générateur de signaux comprend un filtre analogique, en particulier un circuit RC passe-bas, ce circuit RC étant constitué d'une résistance et d'une capacité.

Ainsi, le générateur de signaux permet de délivrer un signal représentatif de l'alimentation électrique fournie au moteur électrique 16, en particulier de l'intensité I traversant le moteur électrique 16 à l'entrée du microcontrôleur 31.

Avantageusement, le signal de la valeur d'intensité I acquis par le dispositif de mesure 45 est également traité numériquement par au moins un filtre numérique, pouvant être par exemple un filtre passe-bas, mis en oeuvre par le microcontrôleur 31.

Avantageusement, l'unité de contrôle 15 et, plus particulièrement, le microcontrôleur 31 comprend une mémoire, non représentée. Ici, la mémoire est réalisée par une mémoire du microcontrôleur 31, en particulier une mémoire de type EEPROM (acronyme du terme anglo-saxon « Electrically Erasable Programmable Read Only Memory »).

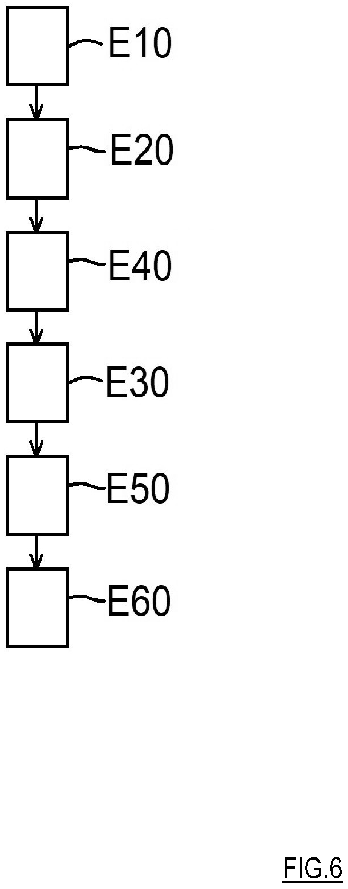

On décrit à présent, en référence à la figure 6, un mode d'exécution d'un procédé, conforme à l'invention, de commande en fonctionnement de l'actionneur électromécanique 11, illustré aux figures 3 à 5, pour le dispositif d'occultation 3, illustré aux figures 1 et 2.

Le procédé comprend une première étape E10 de commande, dans laquelle l'arbre 53 du rotor du moteur électrique 16 est commandé à une consigne de vitesse de rotation demandée de fonctionnement Vn, puis une deuxième étape E20 de commande d'arrêt de l'arbre 53 du rotor du moteur électrique 16.

Le procédé comprend, en outre, suite à la deuxième étape E20 de commande, une troisième étape E30 de commande de blocage de l'arbre 53 du rotor du moteur électrique 16, au cours de laquelle, une partie des commutateurs K1, K2, K3, K4, K5, K6 est maintenue dans un état statique pendant une période de temps prédéterminée T, de sorte à bloquer en rotation l'arbre 53 du rotor du moteur électrique 16, en particulier autour de l'axe de rotation X.

Ici, le maintien dans un état statique pendant la période de temps prédéterminée T d'une partie des commutateurs K1, K2, K3, K4, K5, K6 correspond au maintien des commutateurs K1, K2, K3, K4, K5, K6 concernés dans l'un des leurs états de commutation, en l'occurrence leur état ouvert ou dans leur fermé, au cours de la période de temps prédéterminée T, autrement dit sans changement d'état de commutation tout au long de la période de temps prédéterminée T.

Le procédé comprend, en outre, suite à la troisième étape E30 de commande, une étape E60 de maintien à l'arrêt de l'arbre 53 du rotor du moteur électrique 16 par le frein magnétique 29.

Ainsi, ce procédé de commande permet d'optimiser une valeur d'un couple de maintien magnétique du frein magnétique 29, de sorte à éviter les vibrations générées par le moteur électrique 16, qui est de type sans balais à commutation électronique, lors de son fonctionnement, en particulier lors de la troisième étape E30 de commande, tout en garantissant un maintien à l'arrêt de l'arbre 53 du rotor du moteur électrique 16 par le frein magnétique 29 à une valeur de couple souhaitée et en minimisant le coût d'obtention du frein magnétique 29.

De cette manière, les nuisances sonores provoquées par l'actionneur électromécanique 11, lors du fonctionnement du moteur électrique 16, en particulier lors de la troisième étape E30 de commande, sont évitées.

En outre, la troisième étape E30 de commande permet de mettre en œuvre une phase de blocage de l'arbre 53 du rotor du moteur électrique 16, en exécutant une commande des commutateurs K1, K2, K3, K4, K5, K6 du module d'alimentation électrique 40 différente de celle utilisée lors de la première étape E10 de commande.

Par ailleurs, la commande des commutateurs K1, K2, K3, K4, K5, K6 du module d'alimentation électrique 40, lors de la troisième étape E30 de commande, qui consiste à maintenir une partie des commutateurs K1, K2, K3, K4, K5, K6 dans un état statique pendant la période de temps prédéterminée T, engendre une circulation d'un courant dans les bobines 42, qui aligne les aimants permanents du rotor du moteur électrique 16 avec des flux magnétiques générés par les bobines 42 lors de la mise à l'arrêt de l'arbre 53 du rotor du moteur électrique 16.

Avantageusement, la période de temps prédéterminée T présente une valeur qui est définie lors de la conception de l'actionneur électromécanique 11, en particulier du moteur électrique 16, soit par simulation soit par mesure.

Avantageusement, la valeur de la période de temps prédéterminée T est définie en fonction d'un moment d'inertie du rotor du moteur électrique 16, lors de son entraînement en rotation, autour de l'axe de rotation X.

A titre d'exemple nullement limitatif, la valeur de la période de temps prédéterminée T est comprise dans une plage de valeurs s'étendant entre cinquante (50) millisecondes (ms) et cent cinquante (150) millisecondes (ms).

Avantageusement, la valeur de couple de maintien magnétique du frein magnétique 29 est définie par une valeur de couple de maintien magnétique minimale Cmin. La valeur de couple de maintien magnétique minimale Cmin correspond à une valeur de couple souhaitée dans un état statique du frein magnétique 29, qui permet de maintenir à l'arrêt l'arbre 53 du rotor du moteur électrique 16.

Ici, la valeur de couple de maintien magnétique minimale Cmin est inférieure à celle qui est nécessaire dans le cas de la solution décrite dans le document EP 3 139 487 A2, pour garantir le maintien à l'arrêt de l'arbre 53 du rotor du moteur électrique 16 par le frein magnétique 29.

Avantageusement, la valeur de couple de maintien magnétique minimale Cmin est obtenue par la formule suivante : $Cmin = \frac{\left(Couple_sortie∗Rendement_réducteur\right)}{Rapport de r é duction} - Couple _ frottement$ où :
- « C_couple_sortie » correspond à une valeur de couple fournie par l'actionneur électromécanique 11, au niveau de l'arbre de sortie 20,
- « Rendement_réducteur » est défini par les pertes dues à la friction au niveau des étages de réduction et des liaisons pivot constituant le réducteur 19,
- « Rapport de réduction » correspond à une valeur de rapport de réduction du réducteur 19, et
- « Couple_frottement » correspond à une valeur de couple de frottement du rotor du moteur électrique 16.

Avantageusement, la valeur de couple de frottement du rotor du moteur électrique 16 est définie lors de la conception de l'actionneur électromécanique 11, en particulier du moteur électrique 16, soit par simulation soit par mesure.

A titre d'exemple nullement limitatif, la valeur de couple de frottement du rotor du moteur électrique 16 est comprise dans une plage de valeurs s'étendant entre cinq (5) millinewtons mètre (mNm) et quinze (15) millinewtons mètre (mNm).

Avantageusement, à l'issue de la troisième étape E30 de commande, l'arbre 53 du rotor du moteur électrique 16 est maintenu à l'arrêt. En outre, dans cette position d'arrêt de l'arbre 53 du rotor du moteur électrique 16, les deuxièmes éléments magnétiques 25 de la partie rotorique 23 du frein magnétique 29 sont alignés avec les premiers éléments magnétiques 24 de la partie statorique 22 du frein magnétique 29.

Ainsi, suite à la troisième étape E30 de commande, la partie rotorique 23 du frein magnétique 29 est maintenue en position par rapport à la partie statorique 22 du frein magnétique 29, sans entraînement en rotation de la partie rotorique 23 par rapport à la partie statorique 22, autour de l'axe de rotation X.

Avantageusement, lors de la première étape E10 de commande, le module d'alimentation en énergie électrique 40 est commandé via un signal à modulation de largeur d'impulsions. En outre, suite à la deuxième étape E20 de commande et préalablement à la troisième étape E30 de commande, le procédé comprend une quatrième étape E40 de commande, dans laquelle la vitesse de rotation de l'arbre 53 du rotor du moteur électrique 16 décroît, par une diminution de la largeur d'impulsions du signal à modulation de largeur d'impulsions commandant le module d'alimentation en énergie électrique 40, jusqu'à l'atteinte d'une valeur seuil de vitesse de rotation Sv.

En variante, lors de la première étape E10 de commande, le moteur électrique 16 est placé dans un fonctionnement de charge menante, c'est-à-dire que le rotor du moteur électrique 16 est entraîné en rotation par un déplacement de l'écran 2, qui est couplé à l'arbre de sortie 20 de l'actionneur électromécanique, en particulier par un mouvement de descente de l'écran 2, autrement dit un mouvement de l'écran 2 se déplaçant sous l'effet de gravité. En outre, suite à la deuxième étape E20 de commande et préalablement à la troisième étape E30 de commande, le procédé comprend une quatrième étape E40 de commande, dans laquelle la vitesse de rotation de l'arbre 53 du rotor du moteur électrique 16 décroît, par l'application d'un décalage entre une valeur représentative d'un courant de commande du moteur électrique 16 et une valeur représentative d'une force électromotrice du moteur électrique 16, jusqu'à l'atteinte d'une valeur seuil de vitesse de rotation Sv. Avantageusement, le décalage est un retard. En variante, le décalage est une avance. Avantageusement, le décalage est défini par une valeur d'angle de décalage, pouvant être, par exemple, strictement supérieure à 0° et inférieure ou égale à 70°, qui est soit prédéterminée et mémorisée par l'unité de contrôle 15, en particulier dans une mémoire du microcontrôleur 31, notamment en fonction de caractéristiques du moteur électrique 16 et de caractéristiques de l'écran 2, soit déterminée par l'unité de contrôle 15 au cours du déplacement de l'écran 2, notamment en fonction d'au moins une valeur de courant consommé par le moteur électrique 16, qui est mesurée par l'unité de contrôle 15, en particulier par le dispositif de mesure 45. Avantageusement, lorsque le moteur électrique 16 est placé dans le fonctionnement de charge menante, lors de la première étape E10 de commande, l'unité de contrôle 15 met en œuvre une régulation de la vitesse de rotation du rotor du moteur électrique 16 et du courant de commande du moteur électrique 16.

Dans un exemple de réalisation, lors de la troisième étape E30 de commande, deux commutateurs K1, K2, K3, K4, K5, K6 sont maintenus dans un état statique pendant la période de temps prédéterminée T, chacun des deux commutateurs K1, K2, K3, K4, K5, K6 appartenant à un bras B1, B2, B3 distinct du module d'alimentation électrique 40.

Dans ce cas, les combinaisons possibles des deux commutateurs K1, K2, K3, K4, K5, K6 qui sont maintenus dans un état statique pendant la période de temps prédéterminée T sont les suivantes :
- les commutateurs K1 et K5,
- les commutateurs K1 et K6,
- les commutateurs K2 et K6,
- les commutateurs K2 et K4,
- les commutateurs K3 et K4, et
- les commutateurs K3 et K5.

Dans un autre exemple de réalisation, lors de la troisième étape E30 de commande, trois commutateurs K1, K2, K3, K4, K5, K6 sont maintenus dans un état statique pendant la période de temps prédéterminée T, chacun des trois commutateurs K1, K2, K3, K4, K5, K6 appartenant à un bras B1, B2, B3 distinct du module d'alimentation électrique 40.

Dans ce cas, les combinaisons possibles des trois commutateurs K1, K2, K3, K4, K5, K6 qui sont maintenus dans un état statique pendant la période de temps prédéterminée T sont les suivantes :
- les commutateurs K1, K5 et K6,
- les commutateurs K1, K3 et K5,
- les commutateurs K1, K2 et K6,
- les commutateurs K2, K3 et K4,
- les commutateurs K2, K4 et K6, et
- les commutateurs K3, K4 et K5.

Dans un exemple de réalisation, l'état dans lequel les commutateurs K1, K2, K3, K4, K5, K6 sont maintenus dans un état statique pendant la période de temps prédéterminée T, lors de la troisième étape E30 de commande, correspond au dernier ordre de commande émis par l'unité de contrôle 15 pour alimenter en énergie électrique les bobines 42, suivant l'émission d'un ordre de commande d'arrêt à la deuxième étape E20 de commande.

Dans un autre exemple de réalisation, l'état dans lequel les commutateurs K1, K2, K3, K4, K5, K6 sont maintenus dans un état statique pendant la période de temps prédéterminée T, lors de la troisième étape E30 de commande, correspond à un ordre de commande émis par l'unité de contrôle 15 pour alimenter en énergie électrique les bobines 42 suite à un nombre de cycles de commande prédéterminé des commutateurs K1, K2, K3, K4, K5, K6, suivant l'émission d'un ordre de commande d'arrêt à la deuxième étape E20 de commande.

Dans un autre exemple de réalisation, l'état dans lequel les commutateurs K1, K2, K3, K4, K5, K6 sont maintenus dans un état statique pendant la période de temps prédéterminée T, lors de la troisième étape E30 de commande, correspond à un ordre de commande prédéterminé de blocage émis par l'unité de contrôle 15 pour stopper l'alimentation en énergie électrique des bobines 42, suivant l'émission d'un ordre de commande d'arrêt à la deuxième étape E20 de commande.

Avantageusement, le procédé comprend, en outre, suite à la troisième étape E30 de commande et préalablement à l'étape E60 de maintien à l'arrêt, une étape E50 de coupure de l'alimentation en énergie électrique du module d'alimentation électrique 40.

Ainsi, le courant circulant dans les bobines 42, au cours de la troisième étape E30 de commande, présente une valeur qui définit une valeur d'effort de maintien à l'arrêt de l'arbre 53 du rotor du moteur électrique 16, préalablement à la coupure de l'alimentation en énergie électrique du module d'alimentation électrique 40.

Grâce à la présente invention, le procédé de commande permet d'optimiser une valeur d'un couple de maintien magnétique du frein magnétique, de sorte à éviter les vibrations générées par le moteur électrique, qui est de type sans balais à commutation électronique, lors de son fonctionnement, en particulier lors de la troisième étape de commande, tout en garantissant un maintien à l'arrêt de l'arbre du rotor du moteur électrique par le frein magnétique à une valeur de couple souhaitée et en minimisant le coût d'obtention du frein magnétique.

De nombreuses modifications peuvent être apportées aux exemples de réalisation décrits précédemment, sans sortir du cadre de l'invention défini par les revendications.

En variante, non représentée, l'écran 2 est disposé à l'intérieur du bâtiment.

En variante, non représentée, le frein 29 est configuré pour être disposé, autrement dit est disposé, en particulier dans la configuration assemblée de l'actionneur électromécanique 11, entre l'unité de contrôle 15 et le moteur électrique 16, autrement dit à l'entrée du moteur électrique 16, entre le réducteur 19 et l'arbre de sortie 20, autrement dit à la sortie du réducteur 19, ou entre deux étages de réduction du réducteur 19.

En outre, les modes de réalisation et variantes envisagés peuvent être combinés pour générer de nouveaux modes de réalisation de l'invention, sans sortir du cadre de l'invention défini par les revendications.

## Revendications

1. Procédé de commande en fonctionnement d'un actionneur électromécanique (11) pour un dispositif d'occultation (3),
l'actionneur électromécanique (11) comprenant au moins :
- un moteur électrique (16), le moteur électrique (16) étant de type sans balais à commutation électronique, le moteur électrique (16) comprenant au moins un rotor et un stator, le rotor comprenant au moins un arbre (53), le stator comprenant au moins des bobines (42),
- une unité de contrôle (15), l'unité de contrôle (15) comprenant un module d'alimentation électrique (40), le module d'alimentation électrique (40) comprenant des commutateurs (K1, K2, K3, K4, K5, K6), le module d'alimentation électrique (40) alimentant en énergie électrique de manière séquentielle les bobines (42), au moyen des commutateurs (K1, K2, K3, K4, K5, K6), et
- un frein magnétique (29), le frein magnétique (29) comprenant une partie statorique (22) et une partie rotorique (23), la partie statorique (22) comprenant des premiers éléments magnétiques (24), la partie rotorique (23) comprenant des deuxièmes éléments magnétiques (25),
dans lequel, lorsque l'arbre (53) du rotor du moteur électrique (16) est maintenu à l'arrêt par le frein magnétique (29), les deuxièmes éléments magnétiques (25) de la partie rotorique (23) sont disposés à distance des premiers éléments magnétiques (24) de la partie statorique (22) et génèrent un couple de maintien du frein magnétique (29),
le procédé comprenant au moins :
- une première étape (E10) de commande, dans laquelle l'arbre (53) du rotor du moteur électrique (16) est commandé à une consigne de vitesse de rotation demandée de fonctionnement (Vn),
- suite à la première étape de commande (E10), une deuxième étape (E20) de commande d'arrêt de l'arbre (53) du rotor du moteur électrique (16), et
- suite à la deuxième étape (E20) de commande, une étape (E60) de maintien à l'arrêt de l'arbre (53) du rotor du moteur électrique (16) par le frein magnétique (29),
**caractérisé en ce que**, suite à la deuxième étape (E20) de commande et préalablement à l'étape (E60) de maintien à l'arrêt, le procédé comprend, en outre, une troisième étape (E30) de commande de blocage de l'arbre (53) du rotor du moteur électrique (16), au cours de laquelle une partie des commutateurs (K1, K2, K3, K4, K5, K6) est maintenue dans un état statique pendant une période de temps prédéterminée (T), de sorte à bloquer en rotation l'arbre (53) du rotor du moteur électrique (16).

2. Procédé de commande en fonctionnement d'un actionneur électromécanique (11) pour un dispositif d'occultation (3) selon la revendication 1, **caractérisé**
**en ce que** le rotor comprend, en outre, des aimants permanents,
et **en ce que** la commande des commutateurs (K1, K2, K3, K4, K5, K6) du module d'alimentation électrique (40), lors de la troisième étape de commande (E30), engendre une circulation d'un courant dans les bobines (42), qui aligne des aimants permanents du rotor du moteur électrique (16) avec des flux magnétiques générés par les bobines (42) lors de la mise à l'arrêt de l'arbre (53) du rotor du moteur électrique (16).

3. Procédé de commande en fonctionnement d'un actionneur électromécanique (11) pour un dispositif d'occultation (3) selon la revendication 1 ou selon la revendication 2, **caractérisé en ce que** le procédé comprend, en outre, suite à la deuxième étape (E20) de commande et préalablement à la troisième étape (E30) de commande, une quatrième étape (E40) de commande, dans laquelle la vitesse de rotation de l'arbre (53) du rotor du moteur électrique (16) décroît, jusqu'à l'atteinte d'une valeur seuil de vitesse de rotation (Sv).

4. Procédé de commande en fonctionnement d'un actionneur électromécanique (11) pour un dispositif d'occultation (3) selon l'une quelconque des revendications 1 à 3, **caractérisé**
**en ce que** le nombre de commutateurs (K1, K2, K3, K4, K5, K6) est égal à six,
**en ce que** le module d'alimentation électrique (40) comprend trois bras (B1, B2, B3), et en ce que, lors de la troisième étape (E30) de commande, deux commutateurs (K1, K2, K3, K4, K5, K6) sont maintenus dans un état statique pendant la période de temps prédéterminée (T), chacun des deux commutateurs (K1, K2, K3, K4, K5, K6) appartenant à un bras (B1, B2, B3) distinct du module d'alimentation électrique (40).

5. Procédé de commande en fonctionnement d'un actionneur électromécanique (11) pour un dispositif d'occultation (3) selon l'une quelconque des revendications 1 à 3, **caractérisé**
**en ce que** le nombre de commutateurs (K1, K2, K3, K4, K5, K6) est égal à six,
**en ce que** le module d'alimentation électrique (40) comprend trois bras (B1, B2, B3), et en ce que, lors de la troisième étape (E30) de commande, trois commutateurs (K1, K2, K3, K4, K5, K6) sont maintenus dans un état statique pendant la période de temps prédéterminée (T), chacun des trois commutateurs (K1, K2, K3, K4, K5, K6) appartenant à un bras (B1, B2, B3) distinct du module d'alimentation électrique (40).

6. Procédé de commande en fonctionnement d'un actionneur électromécanique (11) pour un dispositif d'occultation (3) selon l'une quelconque des revendications 1 à 5, **caractérisé en ce que** l'état dans lequel les commutateurs (K1, K2, K3, K4, K5, K6) sont maintenus dans un état statique pendant la période de temps prédéterminée (T), lors de la troisième étape (E30) de commande, correspond au dernier ordre de commande émis par l'unité de contrôle (15) pour alimenter en énergie électrique les bobines (42), suivant l'émission d'un ordre de commande d'arrêt à la deuxième étape (E20) de commande.

7. Procédé de commande en fonctionnement d'un actionneur électromécanique (11) pour un dispositif d'occultation (3) selon l'une quelconque des revendications 1 à 5, **caractérisé en ce que** l'état dans lequel les commutateurs (K1, K2, K3, K4, K5, K6) sont maintenus dans un état statique pendant la période de temps prédéterminée (T), lors de la troisième étape (E30) de commande, correspond à un ordre de commande émis par l'unité de contrôle (15) pour alimenter en énergie électrique les bobines (42), suite à un nombre de cycles de commande prédéterminé des commutateurs (K1, K2, K3, K4, K5, K6), suivant l'émission d'un ordre de commande d'arrêt à la deuxième étape (E20) de commande.

8. Procédé de commande en fonctionnement d'un actionneur électromécanique (11) pour un dispositif d'occultation (3) selon l'une quelconque des revendications 1 à 5, **caractérisé en ce que** l'état dans lequel les commutateurs (K1, K2, K3, K4, K5, K6) sont maintenus dans un état statique pendant la période de temps prédéterminée (T), lors de la troisième étape (E30) de commande, correspond à un ordre de commande prédéterminé de blocage émis par l'unité de contrôle (15) pour stopper l'alimentation en énergie électrique des bobines (42), suivant l'émission d'un ordre de commande d'arrêt à la deuxième étape (E20) de commande.

9. Procédé de commande en fonctionnement d'un actionneur électromécanique (11) pour un dispositif d'occultation (3) selon l'une quelconque des revendications 1 à 8, **caractérisé en ce que** le procédé comprend, en outre, suite à la troisième étape (E30) de commande et préalablement à l'étape (E60) de maintien à l'arrêt, une étape (E50) de coupure de l'alimentation en énergie électrique du module d'alimentation électrique (40).

10. Actionneur électromécanique (11) pour un dispositif d'occultation (3),
l'actionneur électromécanique (11) comprenant au moins :
- un moteur électrique (16), le moteur électrique (16) étant de type sans balais à commutation électronique, le moteur électrique (16) comprenant au moins un rotor et un stator, le rotor comprenant au moins un arbre (53), le stator comprenant au moins des bobines (42),
- une unité de contrôle (15), l'unité de contrôle (15) comprenant un module d'alimentation électrique (40), le module d'alimentation électrique (40) comprenant des commutateurs (K1, K2, K3, K4, K5, K6), le module d'alimentation électrique (40) alimentant en énergie électrique de manière séquentielle les bobines (42), au moyen des commutateurs (K1, K2, K3, K4, K5, K6), et
- un frein magnétique (29),
**caractérisé en ce que** l'unité de contrôle (15) est configurée pour mettre en œuvre le procédé selon l'une quelconque des revendications 1 à 9.

11. Dispositif d'occultation (3),
le dispositif d'occultation (3) comprenant au moins :
- un écran (2), et
- un actionneur électromécanique (11), l'écran (2) étant entraîné en déplacement par l'actionneur électromécanique (11),
**caractérisé en ce que** l'actionneur électromécanique (11) est conforme à la revendication 10.
